# FASCICULE DE BREVET EUROPEEN

(11) **EP 3 034 193 B1**
(45) Date de publication et mention de la délivrance du brevet: **06.02.2019**
(21) Numéro de dépôt: 15201347.0
(22) Date de dépôt: 18.12.2015
(51) Int. Cl.: B21J 5/02, B21K 1/04

(54) **PROCEDE DE FABRICATION D'UNE BAGUE EXTERIEURE DE ROULEMENT, ET BAGUE OBTENUE PAR CE PROCEDE**
HERSTELLUNGSVERFAHREN EINES ÄUSSEREN LAUFRINGS, UND DURCH DIESES VERFAHREN ENTSTANDENER RING
METHOD FOR MANUFACTURING A BEARING OUTER RING, AND RING OBTAINED BY SAID METHOD

(30) Priorité: 19.12.2014 FR 1462991
(43) Date de publication de la demande: 22.06.2016
(73) Titulaire: NTN-SNR Roulements, 74010 Annecy (FR)
(72) Inventeur: NOEL, Guillaume, 74150 Boussy (FR)
(74) Mandataire: Alatis

(56) Documents cités:
- EP-A1- 1 719 565
- EP-A1- 2 239 069
- JP-A- 2007 210 014
- JP-A- 2014 083 551
- US-A1- 2007 065 065

## Description

### DOMAINE TECHNIQUE DE L'INVENTION

L'invention se rapporte à un procédé de fabrication d'une bague extérieure de roulement.

### ÉTAT DE LA TECHNIQUE ANTÉRIEURE

Dans le document JP 2006177466 est décrit un procédé de fabrication d'une bague extérieure de roulement par forgeage. Une ébauche est tout d'abord constituée à partir d'un cylindre d'acier, puis cette ébauche subit un forgeage, à l'issue duquel est obtenue une pièce brute présentant une zone centrale discoïdale de faible épaisseur, une zone annulaire entourant la zone centrale discoïdale et ayant une hauteur plus importante que la zone centrale discoïdale, des oreilles constituant des extensions radiales autour de la zone annulaire, et une zone périphérique d'échappement de faible hauteur entourant toute la pièce brute. La zone périphérique d'échappement est constituée par un excédent de matière qui vient remplir un volume d'échappement périphérique prévu à cet effet dans l'outillage de forgeage sensiblement au niveau d'un plan de joint entre les pièces de l'outillage de forgeage, ce volume d'échappement permettant de maîtriser le bon remplissage des volumes de l'outillage correspondant à la partie utile de la pièce, à savoir la zone annulaire et les oreilles. La pièce brute subit ensuite une découpe de la zone centrale discoïdale et de la zone périphérique d'échappement pour ne conserver que la zone annulaire qui constituera in fine la bague extérieure. Il serait donc avantageux de minimiser le volume d'échappement afin de minimiser les pertes de matière, sans pour autant perdre la maîtrise du bon remplissage des parties utiles de l'outillage.

Dans le document EP2239069, sur lequel le préambule de la revendication 1 est basé, est décrit un procédé de fabrication d'une bague extérieure de roulement par forgeage qui se distingue du précédent par le positionnement du plan de joint et de la zone périphérique d'échappement. Le plan de joint entre les pièces de l'outillage de forgeage est ici tangent à une extrémité axiale des oreilles, ce qui permet de constituer un volume d'échappement au niveau des oreilles uniquement, et plus spécifiquement au niveau de gorges individuelles débouchant axialement dans chacune des oreilles. L'excédent de matière qui vient remplir les gorges d'échappement lors du forgeage est ensuite enlevé par une opération de finition au tour. Les pertes de matière sont ici moins importantes que dans le procédé précédent. Mais le chemin emprunté par la matière de l'ébauche lors du forgeage pour former les oreilles et remplir partiellement les gorges d'échappement nécessite un changement de direction, puisque la matière pénètre radialement dans les cavités formant les oreilles puis axialement dans les gorges d'échappement, ce qui requiert un surcroit de puissance lors du forgeage, ou une température élevée de la matière lors de cette opération.

### EXPOSÉ DE L'INVENTION

L'invention vise à remédier aux inconvénients de l'état de la technique et à limiter la quantité de matière perdue lors du forgeage sans surcroit trop important d'énergie lors du forgeage et sans augmenter les rebuts. Pour ce faire est proposé, selon un premier aspect de l'invention, un procédé de fabrication d'une bague extérieure de roulement en métal ayant un axe de référence, selon la revendication 1.

Des volumes d'échappement sont donc constitués aux extrémités des zones auriculaires uniquement, tout le reste de la cavité étant occupé par la pièce brute. La matière de l'ébauche en cours de déformation entre les outils de forgeage remplit progressivement les zones auriculaires de la cavité, de manière maîtrisée, l'excédent de matière étant libre d'occuper les volumes d'échappement. La finition de la pièce ne nécessite pas d'intervention dans la zone difficilement accessible entre les oreilles. Les bavures sont limitées, d'où un gain substantiel de matière. Le positionnement du volume d'échappement dans chaque zone auriculaire n'impose pas à la matière de l'ébauche des changements de direction importants, et est donc compatible avec une opération sur une ébauche à température moins élevée que dans l'état de la technique, d'où un gain d'énergie et de temps de chauffe.

Les portions de lignes de bavure, qui n'ont pas vocation à être reprises lors de la finition, sont de faibles dimensions. Elles ont une dimension axiale de préférence inférieure à 2 mm (et de préférence inférieure à 1 mm) et de préférence une dimension radiale inférieure à 2 mm (et de préférence inférieure à 1 mm).

Pour chacune des oreilles, la surface reprise est de préférence bordée par les flancs, de préférence sans arête entre la surface reprise et les flancs.

La constitution pour chacune des oreilles d'une surface reprise est effectuée de préférence par tournage de la pièce brute autour de l'axe de référence. Les outils de coupe de tournage sont en effet aptes à supporter des phases de découpe lors de l'usinage des oreilles entrecoupées de phases à vide, entre deux oreilles.

Outre les étapes de finition déjà discutées, la finition de la bague extérieure de roulement peut inclure une ou plusieurs des étapes suivantes:
- une découpe de la portion centrale de la pièce brute;
- une rectification d'au moins une face annulaire intérieure de la portion annulaire de la pièce brute pour former au moins un chemin de roulement;
- un traitement thermique de durcissement de la face annulaire intérieure;
- un perçage traversant d'au moins une des oreilles parallèlement à l'axe de référence.

Suivant un mode de réalisation, la portion centrale de la pièce brute constitue un disque ayant une épaisseur moins importante que la portion annulaire.

L'ébauche présente de préférence des fibres parallèles à l'axe de référence. La déformation lors du forgeage permet d'orienter les fibres d'une manière maîtrisée optimisant les propriétés mécaniques dans la zone dans laquelle seront ultérieurement formés les chemins de roulement. De préférence, l'ébauche est un cylindre présentant un axe parallèle à l'axe de référence.

Suivant un mode de réalisation, l'ébauche est en acier.

De préférence, l'ébauche est placée dans l'outillage de forgeage à une température comprise entre 650°C et 1250°C.

Suivant un autre aspect de l'invention, celle-ci a trait à une bague extérieure de roulement en métal obtenue par le procédé décrit précédemment.

### BRÈVE DESCRIPTION DES FIGURES

D'autres caractéristiques et avantages de l'invention ressortiront à la lecture de la description qui suit, en référence aux figures annexées, qui illustrent :
- la figure 1 une vue isométrique en coupe axiale d'une pièce brute située entre des outils d'un outillage de forgeage, à l'issue d'une étape de forgeage consistant à rapprocher l'un de l'autre les outils;
- la figure 2, un détail d'une coupe axiale de la pièce brute entre les outils d'un outillage de forgeage, dans une zone entre deux oreilles de la pièce brute;
- la figure 3, un détail d'une coupe axiale de la pièce brute entre les outils de l'outillage de forgeage, au niveau d'une des oreilles de la pièce brute;
- la figure 4, une vue isométrique de la pièce brute sortie de l'outillage de forgeage;
- la figure 5, une vue isométrique composée pour moitié (à gauche sur la figure) de la pièce brute issue du procédé de forgeage selon l'invention, ayant subi une première étape de finition, et partiellement (à droite sur la figure) d'une bague extérieure de roulement après une autre étape de finition;
- la figure 6, une vue isométrique d'une bague extérieure de roulement dans un état à l'issue d'un usinage au tour de la pièce brute de la figure 4.

Pour plus de clarté, les éléments identiques ou similaires sont repérés par des signes de référence identiques sur l'ensemble des figures.

### DESCRIPTION DÉTAILLÉE DE MODES DE RÉALISATION

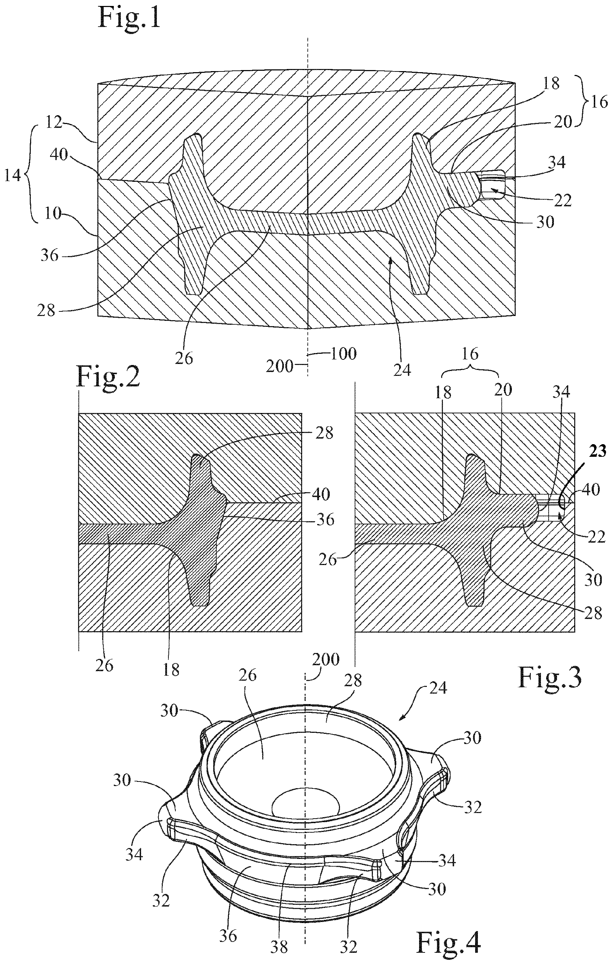

Le procédé de fabrication d'une bague extérieure de roulement selon l'invention est initié par le placement d'une ébauche constituée par exemple par un cylindre d'acier présentant un fibrage parallèle à son axe, préalablement chauffé à une température comprise entre 650°C et 1250°C, entre au moins deux outils 10, 12 d'un outillage de forgeage 14. Les outils 10, 12 sont ensuite rapprochés l'un de l'autre parallèlement à un axe de référence 100 parallèle à l'axe du cylindre, jusqu'à une position de contact illustrée sur les figures 1 à 3, dans laquelle les outils 10, 12 délimitent une cavité 16 fermée comprenant une zone intérieure 18 et au moins trois (ici quatre) zones auriculaires 20 s'étendant radialement vers l'extérieur depuis la zone intérieure 18. Chacune des zones auriculaires 20 comporte une zone de fond constituant un volume d'échappement de matière 22, fermé par une paroi de fond 23 située radialement directement en regard de la zone intérieure 18.

Durant ce rapprochement, l'ébauche est déformée de manière à constituer la pièce brute 24 illustrée sur la figure 4. La pièce brute comporte une portion centrale 26 et une portion annulaire 28 entourant la portion centrale 26, la portion centrale 26 et la portion annulaire 28 occupant la zone intérieure 18 de la cavité, centrée sur un axe de référence 200 de la pièce brute 24, confondu avec l'axe de symétrie de l'ébauche cylindrique et parallèle à l'axe de déplacement relatif des outils 10, 12 de forgeage. La portion centrale 26 de la pièce brute constitue un disque ayant une épaisseur, mesurée parallèlement à l'axe de référence 200, moins importante que la portion annulaire 28. La portion annulaire 28 s'étend axialement de part et d'autre de la portion centrale 26. La pièce brute 24 comporte en outre des oreilles 30 faisant saillie radialement vers l'extérieur à partir de la portion annulaire 28, chacune à l'intérieur d'une des zones auriculaires 20. Chaque oreille 30 comporte des flancs 32 en contact avec des parois des outils 10, 12 et une portion d'extrémité radiale extérieure 34 située radialement à l'extérieur des flancs 32 et remplissant partiellement le volume d'échappement de matière 22, en regard et de préférence à distance de la paroi de fond 23 de la zone auriculaire correspondante 20.

La portion annulaire 28 présente des parois périphériques 36 s'étendant entre les oreilles et tournées radialement vers l'extérieur, en contact avec des parois des outils. La pièce brute 24 présente des portions de lignes de bavure périphérique 38 correspondant à un plan de joint 40 entre les outils et s'étendant sur les flancs 32 des oreilles et sur les parois périphériques 36 de la portion annulaire. Les portions de lignes de bavure 38 ont une dimension axiale inférieure à 2 mm, et de préférence inférieure à 1 mm et de préférence une dimension radiale inférieure à 2 mm, et de préférence inférieure à 1 mm. La pièce brute 24 entre les pièces 10, 12 de l'outillage de forgeage 14 dans la position de contact de la figure 1 occupe toute la cavité 16, à l'exception du volume d'échappement de matière 22 à l'extrémité de chaque zone auriculaire 20, qui est au plus partiellement occupé, un espace étant de préférence préservé entre la pièce brute 24 et la paroi de fond 23.

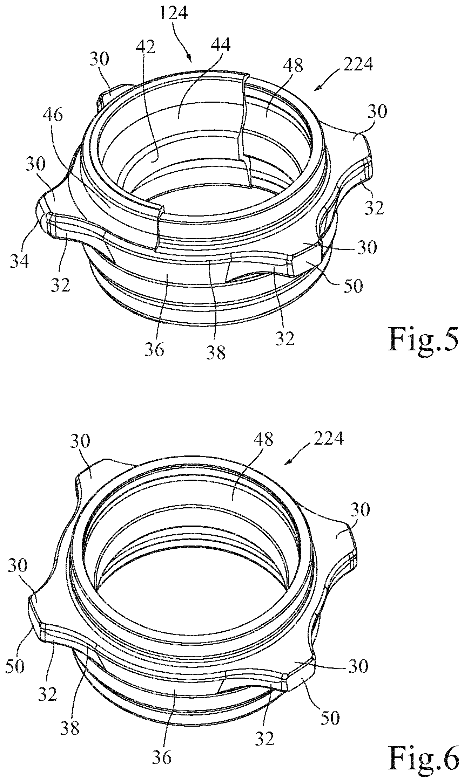

Le plan de joint 40 est un plan perpendiculaire à l'axe 100 de mouvement des outils de forgeage 10, 12, et qui partage en deux la paroi de fond 23, ce qui permet une extraction simple de la pièce brute 24. Une fois extraite de l'outillage de forgeage, la pièce brute 24 illustrée sur la figure 4 subit une finition incluant plusieurs transformations dont certaines sont illustrées sur la figure 5.

Sur la figure 5, la pièce à l'issue d'une première étape de transformation est désignée 124, à gauche sur la figure, et à l'issue d'une deuxième étape de transformation est désignée 224, à droite sur la figure. Dans un premier temps, sur la moitié gauche de la figure 5, la portion centrale 26 (visible sur la figure 4) de la pièce 124 a été découpée par tout moyen approprié, par exemple par poinçonnage de la pièce brute encore chaude. La découpe 42 ouvre la pièce 124 qui présente dès lors une face interne tubulaire 44. Sur la moitié droite de la figure 5 est illustrée une étape subséquente d'usinage de la pièce en vue de constituer une bague extérieure de roulement 224 illustrée sur la figure 6. Cet usinage est préférentiellement réalisé sur un tour d'usinage. Certaines au moins des faces annulaires internes 44 et externes 46 de la pièce brute subissent un enlèvement de matière. Cet usinage inclut le formage d'un ou plusieurs chemins de roulement 48 tournés radialement vers l'intérieur, et le cas échéant la rectification du ou des chemins de roulement 48.

L'usinage de la pièce brute 224 au tour inclut également un enlèvement de matière pour supprimer la portion d'extrémité 34 de chacune des oreilles et constituer pour chacune des oreilles 30 une surface reprise 50 tournée radialement vers l'extérieur. Cet usinage est réalisé avec un outil de tournage. Pour chacune des oreilles, la surface reprise 50 est bordée par les flancs 32. De préférence, il n'y a pas de rupture de pente, donc pas d'arête entre la surface reprise 50 et les flancs 32.

Les faces 36 de la pièce brute 24 situées circonférentiellement entre les oreilles 30 ne sont pas modifiées lors du tournage et restent, après finition de la pièce 224, dans leur état à l'issue du forgeage. En particulier, les portions de ligne de bavure 38 sur les flancs 32 des oreilles 30 et sur les parois périphériques 36 de la portion annulaire 28 restent sans modifications.

La bague extérieure de roulement 224 finie ou semi-finie à l'issue des opérations sur le tour d'usinage est illustrée sur la figure 6. L'axe de référence 200 de la bague 224, qui correspond à l'axe de symétrie de révolution des chemins de roulement 46, correspond à l'axe de référence de l'ébauche cylindrique avant son insertion entre les outils de forgeage 10, 12. D'autres opérations d'usinage peuvent compléter la finition de la bague extérieure de roulement. On peut ainsi procéder le cas échéant à un traitement thermique localisé de durcissement de la face annulaire intérieure. On peut également procéder à un perçage traversant d'au moins une des oreilles parallèlement à l'axe de référence.

## Revendications

1. Procédé de fabrication d'une bague extérieure de roulement (224) en métal ayant un axe de référence (200), le procédé comportant :
- le placement d'une ébauche entre des outils (10, 12) d'un outillage de forgeage (14);
- un rapprochement relatif des outils (10, 12) parallèlement à l'axe de référence (200) de manière à délimiter une cavité (16) comprenant une zone intérieure (18) et au moins trois zones auriculaires (20) s'étendant radialement vers l'extérieur depuis la zone intérieure (18), chacune des trois zones auriculaires (20) comportant une zone de fond constituant un volume d'échappement de matière (22), et à constituer une pièce brute (24) par déformation de l'ébauche dans la cavité (16), la pièce brute (24) comportant une portion centrale (26), une portion annulaire (28) entourant la portion centrale (24), la portion centrale (26) et la portion annulaire (28) occupant la zone intérieure (18) de la cavité (16), la pièce brute (24) comportant en outre des oreilles (30) faisant saillie radialement vers l'extérieur à partir de la portion annulaire (28), chacune à l'intérieur d'une correspondante des zones auriculaires (20), chacune des oreilles (30) comportant des flancs (32) en contact avec des parois des outils (10, 12) et une portion d'extrémité radiale extérieure (34) située radialement à l'extérieur des flancs (32), la portion annulaire (28) présentant des parois périphériques (36) s'étendant entre les oreilles (30) et tournées radialement vers l'extérieur en contact avec des parois des outils (10, 12), et
- une finition de la bague extérieure de roulement (224),
**caractérisé en ce que**
- le rapprochement relatif des outils (10, 12) parallèlement à l'axe de référence (200) est tel que la portion d'extrémité radiale extérieure (34) de chacune des oreilles (30) remplit partiellement un volume d'échappement de matière (22) constitué par la zone de fond de chacune de la zone auriculaire (20) correspondante,
- le rapprochement relatif des outils (10, 12) parallèlement à l'axe de référence (200) est tel que la pièce brute (24) présente des portions de ligne de bavure périphérique (38) correspondant à un plan de joint (40) entre les outils (10, 12) et s'étendant sur les flancs (32) des oreilles (30) et sur les parois périphériques (36) de la portion annulaire (28);
- la finition de la bague extérieure de roulement (224) inclut un usinage de la pièce brute (24) sortie de l'outillage de forgeage avec disparition de la portion d'extrémité (34) de chacune des oreilles (30) et constitution pour chacune des oreilles (30) d'une surface reprise (50) tournée radialement vers l'extérieur, mais sans faire disparaître les portions de ligne de bavure périphérique (38) sur les flancs (32) des oreilles (30) et sur les parois périphériques (36) de la portion annulaire (28), de sorte que la bague extérieure (224) après finition comporte les portions de lignes de bavure périphérique (38).

2. Procédé de fabrication d'une bague extérieure de roulement (224) en métal selon la revendication 1, **caractérisé en ce que** les portions de lignes de bavure périphérique (38) ont une dimension axiale inférieure à 2 mm et de préférence une dimension radiale inférieure à 2 mm.

3. Procédé de fabrication d'une bague extérieure de roulement (224) en métal selon l'une quelconque des revendications précédentes, **caractérisé en ce que** pour chacune des oreilles (30), la surface reprise (50) est bordée par les flancs (32).

4. Procédé de fabrication d'une bague extérieure de roulement (224) en métal selon l'une quelconque des revendications précédentes, **caractérisé en ce que** la constitution pour chacune des oreilles (30) d'une surface reprise (50) est effectuée par tournage de la pièce brute autour de l'axe de référence.

5. Procédé de fabrication d'une bague extérieure de roulement (224) en métal selon l'une quelconque des revendications précédentes, **caractérisé en ce que** la finition de la bague extérieure de roulement (224) inclut une découpe de la portion centrale (26) de la pièce brute (24).

6. Procédé de fabrication d'une bague extérieure de roulement (224) en métal selon l'une quelconque des revendications précédentes, **caractérisé en ce que** la finition de la bague extérieure de roulement (224) inclut une rectification d'au moins une face annulaire intérieure de la portion annulaire de la pièce brute pour former au moins un chemin de roulement (48).

7. Procédé de fabrication d'une bague extérieure de roulement (224) en métal selon l'une quelconque des revendications précédentes, **caractérisé en ce que** la finition de la bague extérieure de roulement inclut un traitement thermique de durcissement de la face annulaire intérieure.

8. Procédé de fabrication d'une bague extérieure de roulement (224) en métal selon l'une quelconque des revendications précédentes, **caractérisé en ce que** la finition de la bague extérieure de roulement inclut un perçage traversant d'au moins une des oreilles (30) parallèlement à l'axe de référence (200).

9. Procédé de fabrication d'une bague extérieure de roulement en métal selon l'une quelconque des revendications précédentes, **caractérisé en ce que** la portion centrale (26) de la pièce brute (24) constitue un disque ayant une épaisseur moins importante que la portion annulaire (28).

10. Procédé de fabrication d'une bague extérieure de roulement en métal selon l'une quelconque des revendications précédentes, **caractérisé en ce que** l'ébauche présente des fibres parallèles à l'axe de référence (200).

11. Procédé de fabrication d'une bague extérieure de roulement en métal selon la revendication précédente, **caractérisé en ce que** l'ébauche est un cylindre présentant un axe parallèle à l'axe de référence (200).

12. Procédé de fabrication d'une bague extérieure de roulement en métal selon l'une quelconque des revendications précédentes, **caractérisé en ce que** l'ébauche est en acier.

13. Procédé de fabrication d'une bague extérieure de roulement en métal selon la revendication précédente, **caractérisé en ce que** l'ébauche est placée dans l'outillage (14) de forgeage à une température comprise entre 650°C et 1250°.

14. Bague extérieure de roulement en métal (200) **caractérisée en ce qu'**elle est obtenue par le procédé selon l'une quelconque des revendications précédentes.

## Patentansprüche

1. Verfahren zur Herstellung eines metallischen Außenrings (224) eines Wälzlagers mit Bezugsachse (200), wobei das Verfahren folgende Schritte umfasst:
- das Einsetzen eines Rohlings in die Werkzeuge (10, 12) einer Schmiedewerkzeugausrüstung(14);
- das relative Annähern der Werkzeuge (10, 12) parallel zur Bezugsachse (200), so dass ein Hohlraum (16) abgegrenzt wird, der einen inneren Bereich (18) umfasst und mindestens drei Ansatzbereiche (20), die sich vom inneren Bereich (18) radial nach außen erstrecken, wobei jeder der drei Ansatzbereiche (20) einen Bodenbereich umfasst, der aus einem Materialaustrittsvolumen (22) besteht, und so dass ein Rohteil (24) durch Verformung des Rohlings im Hohlraum (16) entsteht, wobei das Rohteil (24) einen mittleren Abschnitt (26) und einen den mittleren Abschnitt (24) umgebenden ringförmigen Abschnitt (28) umfasst, wobei sich der mittlere Abschnitt (26) und der ringförmige Abschnitt (28) im Innenbereich (18) des Hohlraums befinden, und das Rohteil (24) des Weiteren Ansätze (30) aufweist, die vom ringförmigen Abschnitt (28) aus radial nach außen vorstehen, jeder in einem entsprechenden Ansatzbereich (20), wobei jeder Ansatz (30) Seiten (32) umfasst, die mit den Wänden der Werkzeuge (10, 12) in Berührung sind, und einen radialen äußeren Endabschnitt (34), der sich radial außen an den Seiten (32) befindet, wobei der ringförmige Abschnitt (28) zwischen den Ansätzen (30) radial nach außen gedrehte Umfangswände (36) aufweist, die in Berührung mit den Wänden der Werkzeuge (10, 12) sind, und
- eine Endbearbeitung des Wälzlager-Außenrings (224),
**dadurch gekennzeichnet, dass**
- die relative Annäherung der Werkzeuge (10, 12) parallel zur Bezugsachse (200) so erfolgt, dass der radiale äußere Endabschnitt (34) jedes Ansatzes (30) teilweise ein Materialaustrittsvolumen (22) füllt, das durch den Bodenbereich des jeweiligen Ansatzbereiches (20) gebildet wird,
- die relative Annäherung der Werkzeuge (10, 12) parallel zur Bezugsachse (200) so erfolgt, dass das Rohteil (24) Abschnitte einer Umfangsgratkante (38) aufweist, die einer Trennebene (40) zwischen den Werkzeugen (10, 12) entsprechen und sich an den Seiten (32) der Ansätze (30) und an den Umfangswänden (36) des ringförmigen Abschnitts (28) entlang erstrecken;
- die Endbearbeitung des Wälzlager-Außenrings (224) die Bearbeitung des aus der Schmiedewerkzeugausrüstung entnommenen Rohteils (24) beinhaltet, bei der der Endabschnitt (34) der jeweiligen Ansätze (30) entfernt wird und an jedem Ansatz (30) eine Aufnahmefläche (50) gebildet wird, die radial nach außen gedreht ist, ohne jedoch die Abschnitte der Umfangsgratkante (38) an den Seiten (32) der Ansätze (30) und an den Umfangswänden (36) des ringförmigen Abschnitts (28) zu entfernen, so dass der Außenring (224) nach der Endbearbeitung die Abschnitte der Umfangsgratkante (38) umfasst.

2. Verfahren zur Herstellung eines metallischen Außenrings eines Wälzlagers (224) nach Anspruch 1, **dadurch gekennzeichnet, dass** die Abschnitte der Umfangsgratkante (38) eine axiale Größe kleiner 2 mm und vorzugsweise eine radiale Größe kleiner 2 mm aufweisen.

3. Verfahren zur Herstellung eines metallischen Außenrings eines Wälzlagers (224) nach einem der vorhergehenden Ansprüche, **dadurch gekennzeichnet, dass** die Aufnahmefläche (50) an jeden Ansatz (30) von den Seiten (32) gerahmt wird.

4. Verfahren zur Herstellung eines metallischen Außenrings eines Wälzlagers (224) nach einem der vorhergehenden Ansprüche, **dadurch gekennzeichnet, dass** an jedem Ansatz (30) durch Drehen des Rohteils um die Bezugsachse eine Aufnahmefläche (50) gebildet wird.

5. Verfahren zur Herstellung eines metallischen Außenrings eines Wälzlagers (224) nach einem der vorhergehenden Ansprüche, **dadurch gekennzeichnet, dass** die Endbearbeitung des Wälzlager-Außenrings (224) das Zuschneiden des mittleren Abschnitts (26) des Rohteils (24) beinhaltet.

6. Verfahren zur Herstellung eines metallischen Außenrings eines Wälzlagers (224) nach einem der vorhergehenden Ansprüche, **dadurch gekennzeichnet, dass** die Endbearbeitung des Wälzlager-Außenrings (224) das Schleifen mindestens einer Ringinnenseite des ringförmigen Abschnitts des Rohteils umfasst, um mindestens eine Laufbahn (48) zu formen.

7. Verfahren zur Herstellung eines metallischen Außenrings eines Wälzlagers (224) nach einem der vorhergehenden Ansprüche, **dadurch gekennzeichnet, dass** die Endbearbeitung des Wälzlager-Außenrings eine Wärmehärtungsbehandlung der inneren Ringfläche umfasst.

8. Verfahren zur Herstellung eines metallischen Außenrings eines Wälzlagers (224) nach einem der vorhergehenden Ansprüche, **dadurch gekennzeichnet, dass** die Endbearbeitung des Wälzlager-Außenrings die Durchbohrung mindestens eines der Ansätze (30) parallel zur Bezugsachse (200) umfasst.

9. Verfahren zur Herstellung eines metallischen Außenrings eines Wälzlagers nach einem der vorhergehenden Ansprüche, **dadurch gekennzeichnet, dass** der mittlere Abschnitt (26) des Rohteils (24) eine Scheibe bildet, die weniger dick ist, als der ringförmige Abschnitt (28).

10. Verfahren zur Herstellung eines metallischen Außenrings eines Wälzlagers (224) nach einem der vorhergehenden Ansprüche, **dadurch gekennzeichnet, dass** der Rohling Fasern parallel zur Bezugsachse (200) aufweist.

11. Verfahren zur Herstellung eines metallischen Außenrings eines Wälzlagers nach einem der vorhergehenden Ansprüche, **dadurch gekennzeichnet, dass** der Rohling ein Zylinder ist, der eine Achse parallel zur Bezugsachse (200) aufweist.

12. Verfahren zur Herstellung eines metallischen Außenrings eines Wälzlagers nach einem der vorhergehenden Ansprüche, **dadurch gekennzeichnet, dass** der Rohling aus Stahl besteht.

13. Verfahren zur Herstellung eines metallischen Außenrings eines Wälzlagers nach einem der vorhergehenden Ansprüche, **dadurch gekennzeichnet, dass** der Rohling bei einer Temperatur zwischen 650°C und 1250°C in die Schmiedewerkzeugausrüstung (14) eingesetzt wird.

14. Außenring eines metallischen Wälzlagers (200), **dadurch gekennzeichnet, dass** er nach dem Verfahren nach einem der vorhergehenden Ansprüche hergestellt wird.

## Claims

1. A method for manufacturing a metal outer bearing race (224) having a reference axis (200), the method comprising:
- the placing of a blank between dies (10, 12) of a forging tool (14);
- a relative bringing together of the dies (10, 12) parallel to the reference axis (200) so as to delimit a cavity (16) comprising an internal zone (18) and at least three auricular zones (20) extending radially outwards from the internal zone (18), each of the three auricular zones (20) comprising a bottom zone constituting a material-escape space (22), and so as to form an unfinished piece (24) by deformation of the blank in the cavity (16), the unfinished piece (24) comprising a central portion (26) and an annular portion (28) surrounding the central portion (24), the central portion (26) and the annular portion (28) occupying the internal zone (18) of the cavity (16), the unfinished piece (24) further comprising lugs (30) projecting radially outwards from the annular portion (28), each inside a corresponding one of the auricular zones (20), each of the lugs (30) comprising flanks (32) in contact with walls of the dies (10, 12) and an external radial end portion (34) situated radially outside the flanks (32), the annular portion (28) having peripheral walls (36) extending between the lugs (30) and turned radially outwards in contact with walls of the dies (10, 12), and
- a finishing of the outer bearing race (224), **characterised in that**
- the relative bringing together of the dies (10, 12) parallel to the reference axis (200) is such that the external radial end portion (34) of each of the lugs (30) partially fills a material-escape space (22) formed by the bottom zone of each of the corresponding auricular zones (20),
- the relative bringing together of the dies (10, 12) parallel to the reference axis (200) is such that the unfinished piece (24) has peripheral flash line portions (38), corresponding to a joint face (40) between the dies (10, 12) and extending over the flanks (32) of the lugs (30) and over the peripheral walls (36) of the annular portion (28);
- the finishing of the outer bearing race (224) includes machining of the unfinished piece (24) out of the forging tool with the disappearance of the end portion (34) of each of the lugs (30) and the formation, for each of the lugs (30), of a reworking surface (50) turned radially outwards, but without making the peripheral flash line portions (38) on the flanks (32) of the lugs (30) and on the peripheral walls (36) of the annular portion (28) disappear, so that the outer race (224) after finishing comprises the peripheral flash line portions (38).

2. The method for manufacturing a metal outer bearing race (224) according to claim 1, **characterised in that** the peripheral flash lines (38) have an axial dimension of less than 2 mm and preferably a radial dimension of less than 2 mm.

3. The method for manufacturing a metal outer bearing race (224) according to either of the preceding claims, **characterised in that**, for each of the lugs (30), the reworking surface (50) is bordered by the flanks (32).

4. The method for manufacturing a metal outer bearing race (224) according to any of the preceding claims, **characterised in that** the formation of a reworking surface (50) for each of the lugs (30) is carried out by turning the unfinished piece about the reference axis.

5. The method for manufacturing a metal outer bearing race (224) according to any of the preceding claims, **characterised in that** the finishing of the outer bearing race (224) includes cropping of the central portion (26) of the unfinished piece (24).

6. The method for manufacturing a metal outer bearing race (224) according to any of the preceding claims, **characterised in that** the finishing of the outer bearing race (224) includes planing of at least one internal annular face of the annular portion of the unfinished piece in order to form at least one raceway (48) .

7. The method for manufacturing a metal outer bearing race (224) according to any of the preceding claims, **characterised in that** the finishing of the outer bearing race includes a hardening heat treatment of the internal annular face.

8. The method for manufacturing a metal outer bearing race (224) according to any of the preceding claims, **characterised in that** the finishing of the outer bearing race includes a through piercing of at least one of the lugs (30) parallel to the reference axis (200).

9. The method for manufacturing a metal outer bearing race according to any of the preceding claims, **characterised in that** the central portion (26) of the unfinished piece (24) constitutes a disc having a thickness less than the annular portion (28).

10. The method for manufacturing a metal outer bearing race according to any of the preceding claims, **characterised in that** the blank has fibres parallel to the reference axis (200).

11. The method for manufacturing a metal outer bearing race according to any of the preceding claims, **characterised in that** the blank is a cylinder having an axis parallel to the reference axis (200).

12. The method for manufacturing a metal outer bearing race according to any of the preceding claims, **characterised in that** the blank is made from steel.

13. The method for manufacturing a metal outer bearing race according to any of the preceding claims, **characterised in that** the blank is placed in the forging tool (14) at a temperature of between 650°C and 1250°C.

14. A metal outer bearing race (200), **characterised in that** it is obtained by the method according to any of the preceding claims.
